# EUROPÄISCHE PATENTSCHRIFT

(11) **EP 0 907 093 B1**
(45) Veröffentlichungstag und Bekanntmachung des Hinweises auf die Patenterteilung: **23.01.2008**
(21) Anmeldenummer: 98402091.7
(22) Anmeldetag: 21.08.1998
(51) Int. Cl.: G02B 6/44

(54) **Verfahren zur Herstellung eines Metallröhrchens mit optischer Faser**
Manufacturing methode for a microtube with an optical fibre
Méthode de fabrication d'un tube de protection pour une fibre optique

(30) Priorität: 02.10.1997 DE 19743616
(43) Veröffentlichungstag der Anmeldung: 07.04.1999
(73) Patentinhaber: Draka Comteq B.V., 1083 HJ Amsterdam (NL)
(72) Erfinder: Hannen, Lutz, 41238 Mönchengladbach (DE)
(74) Vertreter: Dohmen, Johannes Maria Gerardus

(56) Entgegenhaltungen:
- EP-A- 0 436 987
- WO-A-94/24595
- DE-A- 4 337 486
- PATENT ABSTRACTS OF JAPAN vol. 006, no. 005 (P-097), 13. Januar 1982 & JP 56 132303 A (SUMITOMO ELECTRIC IND LTD), 16. Oktober 1981
- PATENT ABSTRACTS OF JAPAN vol. 007, no. 038 (P-176), 16. Februar 1983 & JP 57 191604 A (SUMITOMO DENKI KOGYO KK), 25. November 1982

## Beschreibung

Die Erfindung bezieht sich auf ein Verfahren gemäß dem Oberbegriff des Anspruches 1.

Um mechanisch belastbare Lichtwellenleiter herzustellen ist es bekannt, optische Fasern in Metallröhrchen einzubringen. Dieser mechanische Schutz ermöglicht es beispielsweise, Lichtwellenleiter in einem elektrischen Freileiterseil zu führen, indem das Metallröhrchen mit dessen Drähten verseilt wird. Da Freileiterseile in der Regel aus Aluminium bestehen, verursacht die Verwendung von Edelstahlröhrchen als Umhüllung von optischen Fasern jedoch bei Feuchtigkeit die Gefahr elektrochemischer Kontaktkorrosion.

Zur Vermeidung schlägt die Druckschrift EP 0 436 987 B1 vor, das Edelstahlröhrchen außenseitig mit einem unedlen Metall zu beschichten, insbesondere mit längseinlaufenden Aluminiumstreifen zu bekleben. Neben dem Aufwand dieses Verfahrens erweist es sich jedoch als nachteilig, daß sich die Aluminiumbänder bei Belastungen und nachfolgenden Fertigungsschritten leicht vom Stahlröhrchen ablösen. Auch die Herstellung der Edelstahlröhrchen sowie ihr längsseitiges Verschließen durch Verschweißung ist aufwendig.

Weiterhin ist das Conform-Verfahren zur Fertigung von Profilen und Röhrchen aus Nicht-Eisen-Metallen bekannt (Draht und Kabel Panorama, Januar/Februar 1987, Seite 58 ff). Dabei wird Metall, in der Regel in Form eines Stranges, in eine Nut auf dem Umfang eines rotierenden Reibrades eingebracht. Das Rad fördert das Metall in den Stauraum eines Sperrblocks, der mit einem Vorsprung in die Nut eingreift und sie verschließt. Infolge der Drehung des Reibrades entstehen im Stauraum hohe Temperaturen und Drücke, unter denen das Metall plastisch wird. Somit läßt es sich durch eine Formdüse auspressen, wobei es zum Profil oder Rohr erstarrt. Ist die Formdüse näherungsweise parallel zum Umfang des Rades ausgerichtet, lassen sich auf diese Weise auch Kabel, die durch eine zentrale Öffnung der Formdüse geführt werden, mit Aluminium ummanteln. Eine Herstellung von Metallröhrchen für Lichtwellenleiter nach dem Conform-Verfahren ist dagegen unbekannt. Problematisch ist insbesondere das Einbringen der Fasern in das umlaufend geschlossene Metallröhrchen sowie die Gefahr ihrer Beschädigung durch die beim Conform-Verfahren auftretenden Drücke und Temperaturen.

Davon ausgehend hat es sich die Erfindung zur Aufgabe gestellt, ein vorteilhaftes Verfahren zur Herstellung eines vorzugsweise korrosionsfreien Metallröhrchens mit darin verlaufenden optischen Fasern zu entwickeln.

Diese Aufgabe wird erfindungsgemäß durch die kennzeichnenden Merkmale des Anspruches 1 gelöst.

Der zentrale Gedanke der Erfindung besteht darin, das Metallröhrchen in einem kontinuierlichen Prozeß nach dem Conform-Verfahren um eine optische Faser, insbesondere eine Glasfaser, herum herzustellen. Dabei kann das Metallröhrchen sowohl eine einzelne Faser umschließen als auch mehrere optische Fasern, die eine Bündelader bilden. Als Metall des Röhrchens sind Nicht-Eisen-Metalle geeignet, insbesondere Aluminium, Aluminiumlegierungen oder Kupfer. Sofern das Metallröhrchen bei der späteren Nutzung mit anderen Metallteilen in Kontakt steht, beispielsweise mit den Drähten eines elektrischen Freileiters, ist es zur Vermeidung von Korrosion zweckmäßig, wenn die Oberflächen des Röhrchens und der Metallteile das gleiche elektrochemische Potential aufweisen, vorzugsweise aus dem gleichen Material bestehen.

Die Fertigung des Metallröhrchens erfolgt, indem sein Ausgangsmaterial zunächst auf beim Conform-Verfahren bekannte Weise auf der Oberfläche eines Reibrades in einen Stauraum gefördert wird. Zu diesem Zweck weist das Reibrad an seinem Umfang eine oder mehrere durch den Stauraum verlaufende Nuten auf, in die das Metall vorzugsweise als Strang, denkbar sind jedoch auch Partikel oder eine Schmelze, eingebracht wird. Der Stauraum wird von der Ausnehmung eines Sperrblocks gebildet, der an die Oberfläche des Reibrades angrenzt und den Nutquerschnitt mit einem Vorsprung ausfüllt. Das im Stauraum befindliche Metall erwärmt sich durch Reibung an der Radoberfläche und wird gleichzeitig durch das vom Rad nachgelieferte Material mit Druck beaufschlagt, so daß es plastisch wird. Daher läßt es sich durch eine Formdüse aus dem Stauraum pressen.

Die Formdüse hat eine ringförmige Austrittsöffnung mit beispielsweise kreisförmigem oder ovalem Ringquerschnitt. Aus ihr tritt das plastische Metall in axialer Richtung aus und erstarrt zu einem nahtlosen Rohr. Insbesondere ist eine Begrenzungsfläche auf der zum Düsenzentrum weisenden Seite der Austrittsöffnung vorhanden, welche die Innenfläche des Rohres ausformt. Während des Auspressens des Metalls werden die optischen Fasern durch eine weitere Öffnung im Zentrum der Formdüse zugeführt. Dabei sind sie allseitig von der Austrittsöffnung für das Metall beabstandet, um eine mechanische oder thermische Schädigung bei der Formung des Rohres zu vermeiden.

Die Zuführung der Fasern erfolgt zumindest mit der Fertigungsgeschwindigkeit des Röhrchens, vorzugsweise jedoch mit einer geringen Überlänge, damit Beschädigungen bei der Weiterverarbeitung des Röhrchens, etwa dem Einseilen in ein Luftkabel, ausgeschlossen sind. Um eine übermäßige Krümmung der Fasern im Bereich der Formdüse zu vermeiden, ist letztere parallel zu einer Tangente durch den Radumfang ausgerichtet. Auf diese Weise können die Fasern in gerader Linie am Rad vorbei durch die Formdüse verlaufen.

Im Ergebnis erhält man ein einfach durchzuführendes und kostengünstiges Verfahren zur kontinuierlichen Herstellung von nahtlosen Metallröhrchen mit darin verlaufenden optischen Fasern.

In einer vorteilhaften Ausgestaltung der Erfindung sind die Fasern im Inneren eines Metallröhrchens befindlich, das durch die Zuführöffnung verläuft. Dabei kann das innere Metallröhrchen beispielsweise aus Stahl oder aus einer Aluminiumlegierung bestehen. Der Abstand zwischen den optischen Fasern und dem aus der Austrittsdüse extrudierten Metall wird in diesem Fall durch das innere Metallröhrchen sichergestellt, das auch als innere Begrenzungsfläche für das aus der Formdüse austretende plastische Metall dienen kann. Daher ist denkbar, daß die ringförmige Austrittsöffnung zur Achse der Formdüse offen ist und das Metall auf die äußere Oberfläche des inneren Röhrchen aufgepreßt wird. Auf diese Weise entsteht ein mehrschichtiges Röhrchen mit einem intensiven Verbund der Materialschichten, der ein Ablösen durch weitere Fertigungsschritte oder Umwelteinflüsse vermeidet.

Wird die äußere Oberfläche des inneren Metallröhrchens vor dem Durchlaufen der Zuführöffnung mit einem Isolator beschichtet, so entsteht durch die nachfolgende Extrusion der äußeren Metallschicht ein Metallröhrchen mit dielektrisch potentialgetrennten Schichten. Durch Anlegen einer Versorgungsspannung lassen sich die Schichten somit als Leiter einer Stromversorgung verwenden, insbesondere für Elemente, die mit den umschlossenen Fasern zusammenwirken, etwa elektrooptischen Verstärkern oder Wandlern. Derartige Metallröhrchen sind zum Einbringen in beliebige Kabel, beispielsweise zur Gebäudeausrüstung geeignet. Zweckmäßig ist dabei ein Stauchschutz vorhanden, der eine übermäßige Knickung des Röhrchens mit Beschädigung der optischen Fasern ausschließt.

Umfaßt das Metallröhrchen mehrere Metallschichten, so werden vorzugsweise sämtliche Schichten nach dem Conform-Verfahren hergestellt. Dabei werden jeweils die optischen Fasern bzw. die Fasern mit den umschließenden inneren Metallschichten durch die Zuführöffnung der Formdüse zugeführt. Die jeweils äußerste Metallschicht wird mittels Metallextrusion durch die Austrittsöffnung der Formdüse hergestellt. Die Zahl aufeinanderfolgender Formdüsen entspricht somit bevorzugt der Zahl der Metallschichten des Röhrchens. Auf diese Weise lassen sich z. B. Fasern mit einem zweischichtigen Röhrchen herstellen, dessen innere Schicht aus einer zugbelastbaren Aluminiumlegierung besteht, die außenseitig mit einer Schicht aus reinem Aluminium zum Korrosionsschutz umgeben ist. Dabei sind Röhrchen aus beliebigen Kombinationen von Nicht-Eisen-Metallen denkbar.

Weiterhin besteht die Möglichkeit, ein Metallröhrchen nach dem Austritt aus der Formdüse durch Ziehen in seinem Durchmesser zu verkleinern. Damit läßt sich auch bei Metallröhrchen mit einem geringen Durchmesser ein hinreichender Abstand zwischen den Fasern im Zentrum der Formdüse und dem heißen Metall im Bereich der Austrittsöffnung erreichen.

Ebenso kann ein äußeres Metallröhrchen auf ein inneres Metallröhrchen aufgezogen werden. Auf diese Weise ist eine mechanisch hochbelastbar Verbindung erreichbar. Weiterhin lassen sich hitzeempfindliche Isolierungen zwischen beiden Metallröhrchen verwenden. Eine hinreichende Nachführgeschwindigkeit bzw. Überlänge der optischen Fasern oder des inneren Metallröhrchens durch die Zuführöffnung ist dabei erforderlich, um unerwünschte Zugbelastungen bei der Streckung des äußeren Metallröhrchens zu vermeiden.

Zum Schutz optischer Fasern ist es üblich, sie bei Anordnung im Inneren eines Röhrchens in ein Füllmittel einzubetten. Zu diesem Zweck haben sich thixotrope Gele bewährt.

Da optische Fasern und thixotrope Gele temperaturempfindlich sind, ist ihr Kontakt mit dem heißen Metall im Bereich der Austrittsöffnung zu vermeiden. Entsprechend wird vorgeschlagen, daß die Zuführöffnung der Formdüse von einer oder mehreren Hohlnadeln gebildet ist, durch welche die Fasern und/oder das Füllmittel in das Metallrohr eingebracht werden. Gleichzeitig bildet die Hohlnadel eine Führung für Fasern bzw. Füllmittel, die ihren Kontakt mit der Wandung des Metallröhrchens im Bereich der Formdüse verhindert.

Die Hohlnadel steht über die Stirnfläche der Formdüse hervor und gestattet einen Kontakt zwischen Fasern bzw. Füllmittel und dem Metallröhrchen erst nach dessen hinreichender Abkühlung. Sofern das Metallröhrchen nach dem Austritt aus der Formdüse durch eine Kühlvorrichtung verläuft, reicht die Hohlnadel bevorzugt endseitig bis in den gekühlten Bereich hinein. Wird der Durchmesser des Metallröhrchens durch Ziehen verkleinert, ist es gleichfalls von Vorteil, wenn sich die Hohlnadel bis in den Bereich verringerten Durchmessers erstreckt. In beiden Fällen ist es möglich, daß die Hohlnadel endseitig aus dem Sperrblock zur Formung des Metallröhrchens herausreicht.

Im folgenden Beschreibungsteil wird die Erfindung anhand eines prinzipienhaft dargestellten Ausführungsbeispiels näher erläutert.

Die Zeichnung zeigt
Fig. 1: angeschnittene Ansicht eines Metallröhrchens, das nach dem vorgeschlagenen Verfahren hergestellt ist,
Fig. 2: Querschnitt durch eine Vorrichtung zur Durchführung des Verfahrens.

Das Metallröhrchen (1) besteht aus einem Nicht-Eisen-Metall, vorzugsweise Aluminium, und umschließt eine oder mehrere in Längsrichtung verlaufende optische Fasern (2). Sie befinden sich in einem Füllmittel (3), vorzugsweise einem thixotropen Gel, das den Hohlraum des Metallröhrchens (1) ausfüllt. Außenseitig ist das Metallröhrchen (1) von einem weiteren Metallröhrchen (4) umgeben, das beispielsweise als Korrosionsschutz dient. Zur Vermeidung von Kontaktkorrosion weist es zweckmäßig ein elektrochemisches Potential auf, das dem Potential derjenigen Bauelemente entspricht, mit denen das Metallröhrchen (4) nach seiner Verlegung in Kontakt steht. Denkbar ist, daß die äußere Oberfläche (5) des Metallröhrchens (1) mit einem Isolator beschichtet ist. In diesem Fall sind die Metallröhrchen (1, 4) gegeneinander isoliert und können somit als Leiter zur Stromzuführung dienen, insbesondere für elektrooptische Elemente wie Verstärker in den Fasern (2).

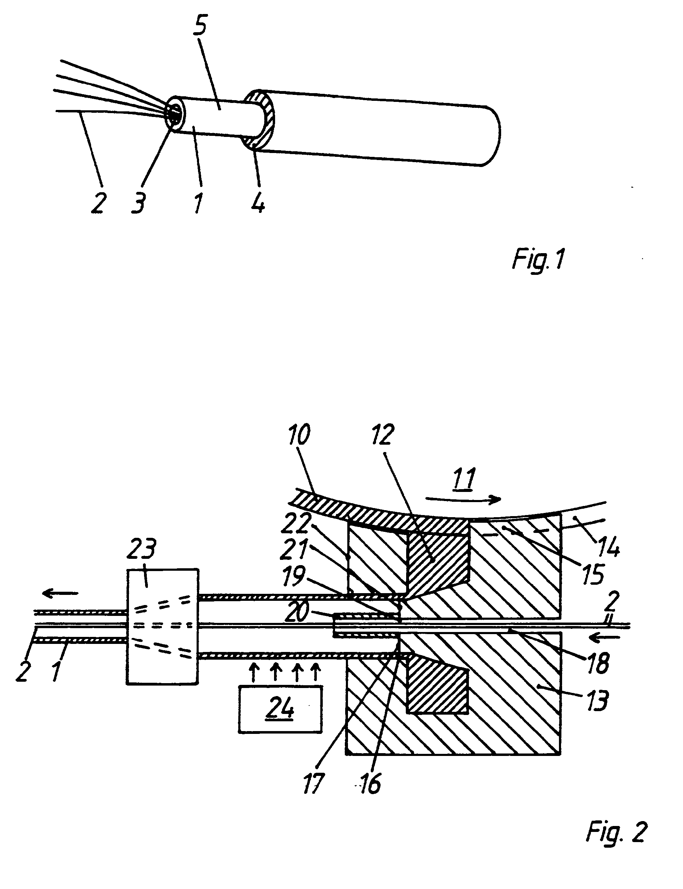

Fig. 2 gibt eine Vorrichtung zur Herstellung eines Metallröhrchens (1, 4) mit optischen Fasern (2) wieder. Das Metall (10) zur Herstellung des Röhrchens (1, 4) wird von einem rotierenden Reibrad (11) in den Stauraum (12) eines Sperrblockes (13) gefördert. Zu diesem Zweck ist das Reibrad an seinem Umfang mit einer oder mehreren umlaufenden Nuten (14) versehen, die von einem Vorsprung (15) des Sperrblockes (13) verschlossen werden. Aufgrund der Temperaturerhöhung an der Oberfläche des Reibrades (11) sowie der Druckbeaufschlagung durch nachgeliefertes Material wird das Metall (10) plastisch und läßt sich somit durch die Austrittsöffnung (16) einer Formdüse (17) zum Metallröhrchen (1, 4) pressen.

Die Zuführung der Fasern (2) durch den Sperrblock (13) erfolgt in einem Kanal (18), der in einer Zuführöffnung (19) im Zentrum der Formdüse (17) endet. Zur verbesserten Führung und zur Vermeidung von Beschädigungen bei der Metallextrusion verlaufen die Fasern in einer Hohlnadel (20), welche die Stirnfläche (21) der Formdüse (17) übersteht. Vorzugsweise steht die Hohlnadel (20) bis über die Außenfläche (22) des Sperrblocks (13) hervor. Auf diese Weise wird sicher vermieden, daß die Fasern (2) mit heißem Metall (10) im Bereich der Formdüse (17) in Berührung kommen. Auch das Füllmittel (3), welches die Fasern (2) umgibt, wird durch den Kanal (18) und die Hohlnadel (20) in das Innere des Metallröhrchens (1, 4) geleitet.

Dem Sperrblock (13) ist eine Ziehvorrichtung (23) nachgeordnet, mit dem sich der Durchmesser des Metallröhrchens (1, 4) auf einen gewünschten Wert reduzieren läßt. Um mechanische Belastungen zu vermeiden, sind die Fasern (2) in diesem Fall zumindest mit der Geschwindigkeit durch die Hohlnadel (20) nachzuführen, die der Bewegungsgeschwindigkeit des Metallröhrchens (1, 4) nach dem Durchlaufen der Ziehvorrichtung (23) entspricht. Auch eine geringfügig höhere Fördergeschwindigkeit der Fasern (2) durch den Kanal (18) ist zur Erzeugung einer Überlänge im Inneren des Metallröhrchens (1, 4) möglich. Zweckmäßig ist eine Kühlvorrichtung (24) zur Abkühlung des Metallröhrchens (1, 4) nach Austritt aus dem Sperrblock (13).

Mit einer gleichartigen Vorrichtung lassen sich auch zweischichtige Metallröhrchen herstellen, wie sie beispielsweise in Fig. 1 dargestellt sind. In diesem Fall wird anstelle der Fasern (2) ein inneres Metallröhrchen mit den darin befindlichen Fasern (2) durch den Kanal (18) zugeführt Zur Gewährleistung eines festen mechanischen Verbundes wird nachfolgend das äußere Metallröhrchen in der Ziehvorrichtung (23) auf das innere Metallröhrchen aufgezogen.

## Patentansprüche

1. Verfahren zur Herstellung eines Metallröhrchens (1, 4) mit einer oder mehreren darin verlaufenden optischen Fasern (2), wobei Metall (10) auf der Oberfläche eines Reibrades (11) unter Druck- und Temperaturbeaufschlagung in einen Stauraum (12) gefördert wird,
näherungsweise tangentialer Richtung zum Radumfang durch die ringförmige Austrittsöffnung (16) einer Formdüse (17) austritt und zum Metallröhrchen (1, 4) erstarrt,
und die optischen Fasern (2) allseitig von der Austrittsöffnung (16) beabstandet durch eine Zuführöffnung (19) im Zentrum der Formdüse (17) zugeführt werden, **dadurch gekennzeichnet, dass** die Fasern (2) In ein Füllmittel (3) im Inneren das Metallröhrchens (1,4) eingebettet werden, wobei die Zuführöffnung (19) der Formdüse (17) eine Hohlnadel (20) ist, durch welche die Fasern (2) und das Füllmittel (3) in das Metallröhrchen (1,4) eingebracht werden, wobei die Hohlnadel (20) die Stirnfläche (21) dar Formdüse (17) übersteht und wobei die Hohlnadel (20) in einem Abstand von dem Metallröhrchen (1,4) gesetzt ist.

2. Verfahren nach Anspruch 1, **dadurch gekennzeichnet, daß** die Fasern (2) in einem inneren Metallröhrchen (1) befindlich sind, das durch die Zuführöffnung (19) verläuft.

3. Verfahren nach Anspruch 2, **dadurch gekennzeichnet, daß** die Oberfläche (5) des inneren Metallröhrchens (1) vor Durchlaufen der Zuführöffnung (19) mit einem Isolator beschichtet wird.

4. Verfahren nach Anspruch 2 oder 3, **dadurch gekennzeichnet, daß**
beide Metallröhrchen (1, 4) nach dem Verfahren gemäß Anspruch 1 hergestellt werden.

5. Verfahren nach einem der vorhergehenden Ansprüche, **dadurch gekennzeichnet, daß** ein Metallröhrchen (1, 4) nach dem Austritt aus der Formdüse (17) durch Ziehen in seinem Durchmesser verkleinert wird.

6. Verfahren nach Anspruch 2 und 5, **dadurch gekennzeichnet, daß** das äußere Metallröhrchen (4) auf das innere Metallröhrchen (1) aufgezogen wird.

7. Verfahren nach einem der vorhergehenden Ansprüche, **dadurch gekennzeichnet, daß** das Metallröhrchen (1, 4) nach dem Austritt aus der Formdüse (17) durch eine Kühlvorrichtung (24) verläuft.

## Claims

1. Method of producing a fine tube (1, 4) of metal having one or more optical fibres (2) extending therein, wherein metal (10) is conveyed on the surface of a friction wheel (11) into a holding space (12) with application of pressure and temperature
and exits in a direction which is approximately tangential to the circumference of the wheel through the annular exit aperture (16) of a shaping nozzle (17) and solidifies to form the fine metal tube (1, 4),
and the optical fibres (2) are fed in, spaced away on all sides from the exit aperture (16), through a feed aperture (19) in the centre of the shaping nozzle (17),
**characterised in that** the fibres (2) are embedded into a filler material (3) inside the fine metal tube (1, 4), the feed aperture (19) of the shaping nozzle (17) being a hollow needle (20) through which the fibres (2) and the filler material (3) are introduced into the fine metal tube (1, 4), the hollow needle (20) extending beyond the end face (21) of the shaping nozzle (17) and the hollow needle (20) being disposed spaced away from the fine metal tube (1, 4).

2. Method according to claim 1, **characterised in that** the fibres (2) are located in an inner fine metal tube (1) which passes through the feed aperture (19).

3. Method according to claim 2, **characterised in that** the surface (5) of the inner fine metal tube (1) is coated with an insulator before passing through the feed aperture (19).

4. Method according to claim 2 or 3, **characterised in that** both fine metal tubes (1, 4) are produced by the method according to claim 1.

5. Method according to one of the preceding claims, **characterised in that**, after exit from the shaping nozzle (17), the diameter of a fine metal tube (1, 4) is reduced by drawing-out.

6. Method according to claim 2 and 5, **characterised in that** the outer fine metal tube (4) is drawn onto the inner fine metal tube (1).

7. Method according to one of the preceding claims, **characterised in that**, after exit from the shaping nozzle (17), the fine metal tube (1, 4) passes through a cooling arrangement (24).

## Revendications

1. Procédé de fabrication d'un tube métallique (1, 4) avec une ou plusieurs fibres optiques (2) s'étendant à l'intérieur, dans lequel du métal (10) est transporté sur la surface d'une roue de friction (11) soumise à une certaine pression et à une certaine température jusque dans un espace de retenue (12) et sort dans une direction sensiblement tangentielle à la circonférence de roue par l'ouverture de sortie annulaire (16) d'une tuyère (17) pour former le tube métallique (1, 4) en se solidifiant, et dans lequel les fibres optiques (2) sont amenées à une certaine distance et de tous les côtés de l'ouverture de sortie (16) par une ouverture d'amenée (19) au centre de la tuyère (17), **caractérisé en ce que** les fibres (2) sont noyées dans une matière de remplissage (3) à l'intérieur du tube métallique (1, 4), l'ouverture d'amenée (19) de la tuyère (17) étant une canule (20) par laquelle les fibres (2) et la matière de remplissage (3) sont introduites dans le tube métallique (1, 4), la canule (20) débordant de la surface frontale (21) de la tuyère (17) et la canule (20) étant placée à une certaine distance du tube métallique (1, 4).

2. Procédé selon la revendication 1, **caractérisé en ce que** les fibres (2) se trouvent dans un tube métallique intérieur (1) qui s'étend à travers l'ouverture d'amenée (19).

3. Procédé selon la revendication 2, **caractérisé en ce que** la surface (5) du tube métallique intérieur (1) est recouverte d'un isolant avant le passage dans l'ouverture d'amenée ( 19 ) .

4. Procédé selon la revendication 2 ou 3, **caractérisé en ce que** les deux tubes métalliques (1, 4) sont fabriqués conformément au procédé selon la revendication 1.

5. Procédé selon l'une des revendications précédentes, **caractérisé en ce qu'**un tube métallique (1, 4) est réduit en diamètre par étirage après la sortie de la tuyère (17).

6. Procédé selon les revendications 2 et 5, **caractérisé en ce que** le tube métallique extérieur (4) est tiré sur le tube métallique intérieur (1).

7. Procédé selon l'une des revendications précédentes, **caractérisé en ce que** le tube métallique (1, 4) passe dans un dispositif de refroidissement (24) après la sortie de la tuyère (17).
